# EUROPEAN PATENT APPLICATION

(11) **EP 3 805 630 A1**
(43) Date of publication of application: **14.04.2021**
(21) Application number: 19807218.3
(22) Date of filing: 24.05.2019
(51) Int. Cl.: F21S 2/00, B60K 35/00, F21V 29/502, F21V 29/503, F21V 29/60, F21V 29/67, F21V 29/70, F21V 29/73, F21V 29/74, F21V 29/89, G02B 27/01, G02F 1/01, F21Y 115/10

(54) **OPTICAL DEVICE**

(30) Priority: 24.05.2018 JP 2018099747
(71) Applicant: Kyocera Corporation, Kyoto-shi, Kyoto 612-8501 (JP)
(72) Inventor: KUBO, Yoshinori, Kyoto-shi, Kyoto 612-8501 (JP)
(74) Representative: Viering, Jentschura & Partner mbB Patent- und Rechtsanwälte
(86) International application number: PCT/JP2019/020767
(87) International publication number: WO 2019/225758

(57) **Abstract**

An optical device of the present disclosure includes a housing internally having a light source, an optical component including a supporting substrate which is formed of a sapphire plate and has an incident surface and an emission surface through which light from the light source transmits, and a function part disposed on the incident surface or the emission surface; a first heat radiation part made of metal for cooling the function part disposed outside the housing; and a second heat radiation part made of metal for cooling the light source disposed outside the housing.

## Description

### TECHNICAL FIELD

The present disclosure relates to an optical device including a light source and an optical component controlling intensity, color, phase, polarization, or direction of light incident from the light source in a housing.

### BACKGROUND ART

Optical components, for example, fluorescent plates, wave plates, polarization plates and liquid crystal panels are used in optical devices such as image display devices including projectors and head-up displays, and light irradiation devices including white LED lighting and vehicle headlights. These optical components may be heated by external light, light source light or the like, and heat radiation components are used to prevent damages and performance deterioration to the optical components.

Among heat radiation components, sapphire is excellent in heat radiation property due to its high thermal conductivity in addition to excellent characteristics such as transmissivity of visible light, strength, and rigidity. Therefore, sapphire is used as a member of an optical component or a heat radiation member for an optical component (for example, Patent Document 1).

### PRIOR ART DOCUMENTS

### PATENT DOCUMENT

[Patent documents 1] Japanese Patent Unexamined Publication No. 2005-313733

### SUMMARY OF THE INVENTION

An optical device of the present disclosure includes a housing internally having a light source, an optical component including a supporting substrate which is formed of a sapphire plate and has an incident surface and an emission surface through which light from the light source transmits, and a function part disposed on the incident surface or the emission surface; a first heat radiation part made of metal for cooling the function part disposed outside the housing; and a second heat radiation part made of metal for cooling the light source disposed outside the housing.

### BRIEF DESCRIPTION OF THE DRAWINGS

Fig. 1 is a schematic view showing a head-up display, which is an embodiment of the present disclosure.
Fig.2 is a schematic view showing a head-up display which is the other embodiment of the disclosure.
Fig.3 is a schematic view showing a head-up display which is the other embodiment of the disclosure.
Fig.4 is a schematic view showing a head-up display which is the other embodiment of the disclosure.
Fig. 5 is an electron micrograph of the surface of the sapphire plate, and it is a photograph of a terrace structure layer.

### PREFERRED EMBODIMENTS FOR CARRYING OUT THE INVENTION

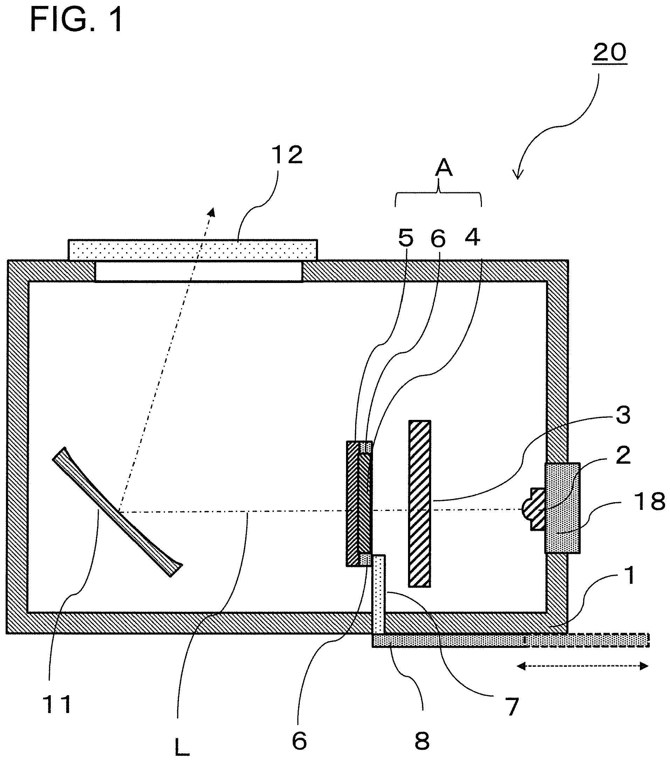

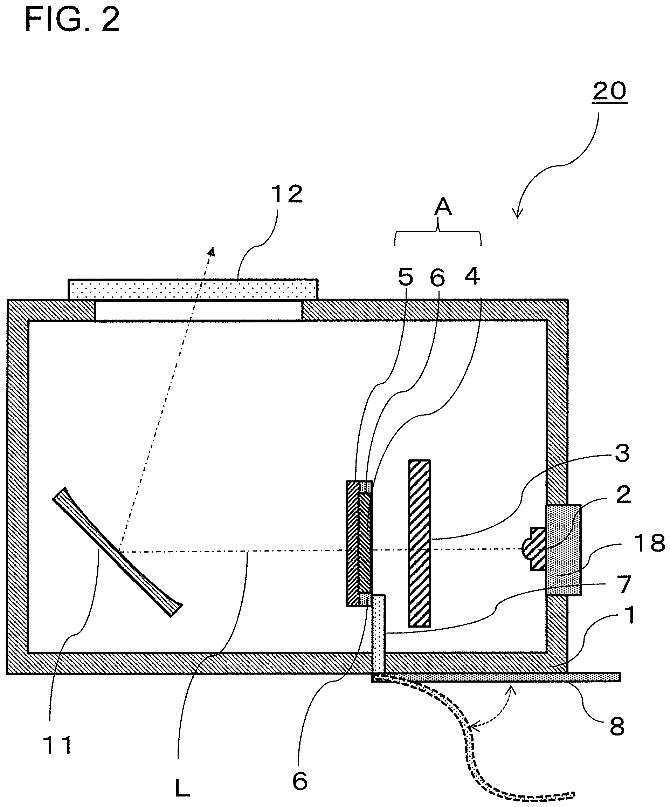

The optical device of the present disclosure is described with reference to the figures by taking an on-vehicle head-up display device (hereinafter, referred as a HUD device) as an example. Fig. 1 is a schematic view showing one embodiment of the HUD device 20, and Figs. 2 to 4 are schematic views showing the other embodiments of the HUD device 20.

The HUD device 20 includes a housing 1, a light source 2, an image forming part 3, and a polarization plate A including a polarizer 4 and a supporting substrate 5 formed of a sapphire plate, which are disposed inside the housing 1. In the present embodiment, the polarization plate A is an optical component, and the polarizer 4 is a function part. The function part other than a polarizer includes, for example, a phosphor, a wavelength filter, a liquid crystal, a mirror, and an antireflection film.

A first heat radiation part 8 made of metal (silver, copper, aluminum, or an alloy thereof or the like) for cooling the polarizer 4 is disposed outside the housing 1.

The HUD device 20 includes a second heat radiation part 18 made of metal for radiating the light source 2, in addition to the first heat radiation part 8 for radiating the polarization plate A. The second heat radiation part 18 is provided on the wall portion of the housing 1, and a part of the second heat radiation part 18 is exposed to the outside of the housing 1. Heat radiation performance is improved by separating the second heat radiation part 18 for the light source 2 and the first heat radiation part 8 for radiating the polarization plate A. Further, when the first heat radiation part 8 is deformable, extendable or pivotable, since the position where the first heat radiation part 8 is cooled can be moved to a desired position, heat radiation performance can be improved, and damages to the polarizer 4 can be suppressed.

The second heat radiation part 18 may be provided outside the housing 1 in the same manner as the first heat radiation part 8. The second heat radiation part 18 is also preferably made of the same metal as the first heat radiation part 8.

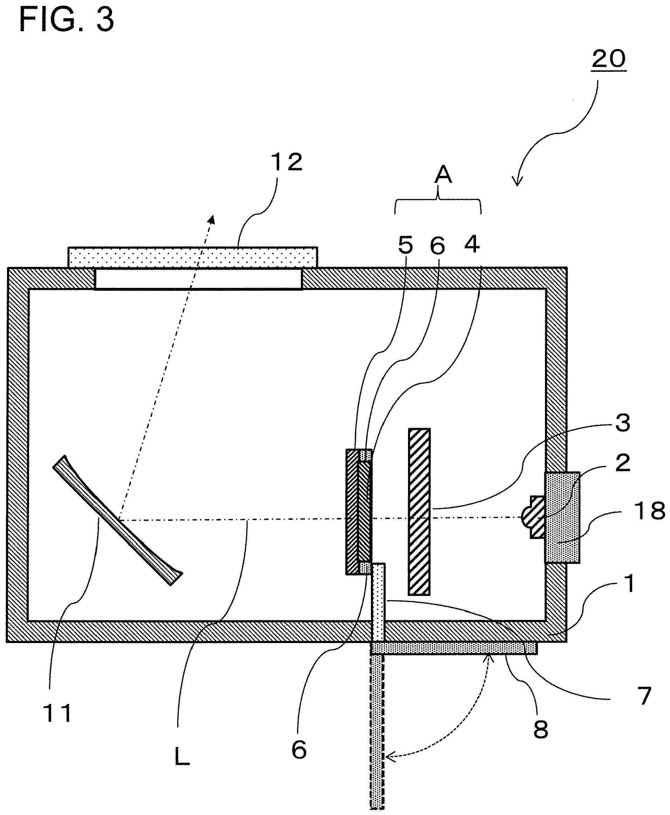

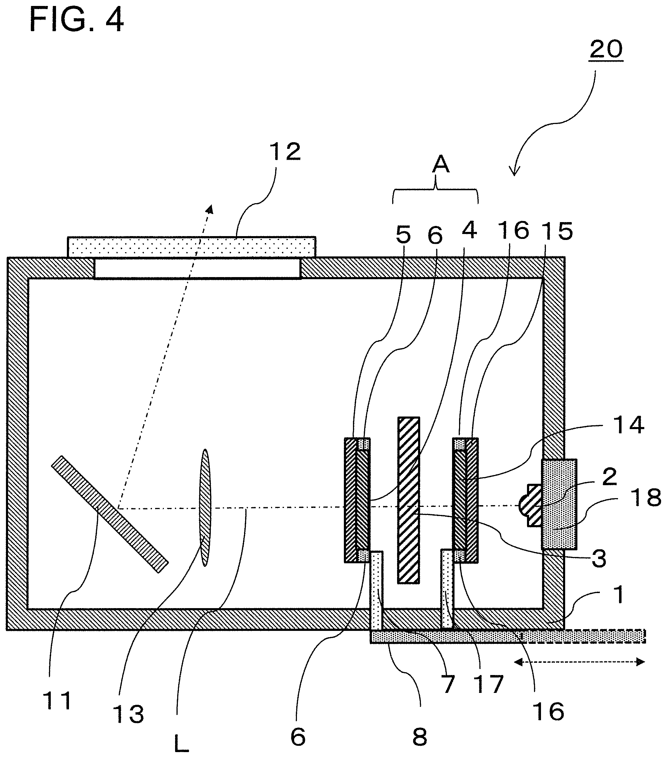

Figs. 1 and 4 show embodiments in which the first heat radiation part 8 is set to be extendable. Fig. 2 shows an embodiment in which the first heat radiation part 8 is set to be deformable. Fig. 3 shows an embodiment in which the first heat radiation part 8 is set to be pivotable with a connection point with a connection part 7 as a fulcrum point.

Here, in order to make the first heat radiation part 8 extendable, the first heat radiation part 8 is preferable to have a bellows shape, a honeycomb pattern, a coil shape or a shape that another member is slidably inserted into a tubular member or the like. Additionally, in order to make the first heat radiation part 8 deformable, the first heat radiation part 8 is preferable to have a thin plate shape, a bellows shape, a coil shape or the like. Further, as a material of the first heat radiation part 8, it is preferable to use a metal which is relatively easily deformed such as gold, silver, copper, or aluminum.

The image forming part 3 forms light including an image (image light) from the light (light source light) incident from the light source 2 and emits it. The polarizer 4 has a function of polarizing the image light from the image forming part 3. The supporting substrate 5 is made of a sapphire plate, has an incident surface to which the image light including the light source light enters and an emission surface from which the image light including the light source light emits, and has a translucency that the image light composed of visible light is transmitted.

The polarizer 4 and the first heat radiation part 8 are connected by a metallized layer 6 disposed on the incident surface or the emission surface of the supporting substrate 5 and a connection part 7 made of metal.

The polarizer 4 may be heated by the image light (light source light) or external light such as sunlight incident from the outside of the HUD device 20. In particular, in the optical device for outdoor use such as a head-up display and a vehicle headlight, the polarization plate A may get high temperature because the external light incident into the housing 1 is condensed by such as a light expansion adjusting member 13 (lens or the like) (refer to Fig 4) and a mirror 11. The light source 2 and the polarization plate A are often housed in the sealed housing 1 due to requirements for dustproofing and waterproofing, and therefore heat radiation of the polarization plate A becomes an issue. Since the HUD device 20 of the present embodiment includes the supporting substrate 5 and the first heat radiation part 8, damages to the polarizer 4 can be suppressed.

Sapphire (a single crystal of aluminum oxide) is suitable as a material of the supporting substrate 5. Sapphire has a high thermal conductivity (a value of the thermal conductivity is high). For example, while glass has a thermal conductivity of approximately 0.5 to 1.0 W/m-k, sapphire has a high thermal conductivity of 42 W/m-k. Further, sapphire has a high mechanical strength and rigidity, and its transmissivity of visible light is as high as 80% or more. Light having a wavelength in the range of 400 to 800 nm is so-called visible light.

The supporting substrate 5 may be disposed to the light source 2 side of the polarizer 4, or it may be disposed on the emission side. The supporting substrate 5 has a larger area than the polarizer 4. The supporting substrate 5 is, for example, in a rectangular plate shape having a side of 20 mm to 150 mm and a thickness of 0.2 mm to 10 mm.

The metallized layer 6 takes heat from the supporting substrate 5 by heat conduction, and transfers the heat to the heat radiation part via the connection part 7. The metallized layer 6 contains a metal as a main component, and further contains a glass component. Silver and silver alloys are suitable among metals because of the high thermal conductivity. The metallized layer 6 is firmly adhered to the supporting substrate 5 by a glass component existing in the vicinity of an interface with the supporting substrate 5. Since the metallized layer 6 containing a glass component has higher rigidity than a metal single substance, thermal deformation of the polarization plate A can be reduced. The glass is, for example, a glass containing silicon oxide as a main component. A thickness of the metallized layer 6 is, for example, 10 µm to 200 µm. Silver, copper, or aluminum and those alloys are suitable as materials for the first heat radiation part 8 and the connection part 7.

The metallized layer 6 may be formed on either the incidence surface or the emission surface of the supporting substrate 5. The metallized layer 6 and the connection part 7 are preferable to be connected by brazing or soldering.

Hereinafter, a method for manufacturing the polarization plate A will be described.

First, a sapphire plate serving as the supporting substrate 5 is prepared. The sapphire plate is formed by cutting and processing a sapphire ingot grown using polycrystalline alumina as a raw material. The method for growing the sapphire ingot is not particularly limited, and the sapphire ingot grown by an EFG (Edge-defined film-fed Growth) method, CZ (a Czochralski method), a chiroporous method or the like can be used.

The sapphire plate is processed by a lapping device so that an arithmetic mean roughness Ra of both main surfaces is 1.0 µm or less. Lapping can be performed in a self-weight mode using, for example, a cast iron surface plate and a diamond abrasive grain having a mean particle size of 25 µm.

The arithmetic mean roughness Ra in this specification is a value according to JIS B0601 (2013). The arithmetic mean roughness Ra can be measured by using, for example, a laser microscope device VK-9510 manufactured by Keyence Corporation. For example, measurement conditions are preferable to be as follows: a measurement mode is color super-depth, a measurement magnification is 1000 times, a measurement pitch is 0.02 µm, a cutoff filter λs is 2.5 µm, a cutoff filter λc is 0.08 mm, and a measurement length is 100 µm to 500 µm.

After lapping, a heat treatment may be performed to reduce residual stress and crystal defects on the surface and the inside of the sapphire plate, and to improve the transmissivity of light, or to form a terrace structure layer 23 described later.

Subsequently, the supporting substrate 5 can be manufactured by performing CMP (Chemical Mechanical Polishing) using colloidal silica, and mirror polishing both of the main surfaces of the sapphire plate to have the arithmetic mean roughness Ra being less than 50 nm, preferably less than 1 nm.

A metal or a resin to be the polarizer 4 is formed in a desired area of any of the main surfaces of the supporting substrate 5 by a method such as vapor deposition.

Further, the metallized layer 6 containing a metal as a main component is formed in a region outside the optical path of the supporting substrate 5. The metallized layer 6 is preferable to be formed by coating and sintering a composition containing a metal powder and a glass powder. The metallized layer 6 may be formed on any of the incident surface, the emission surface and a side surface connecting the incident surface and the emission surface. The metallized layer 6 is easier to form on the incident surface or the emission surface because these surfaces are easier to process than the side surface. Since the incident surface or the emission surface has a larger area than the side surface, the effect of heat radiation is also easier to obtain. The metallized layer 6 may be formed on the same main surface of the supporting substrate 5, may be formed on the opposite surface, or may be formed on both surfaces.

A sintering temperature of the metallized layer 6 is usually 600°C or higher, but it may be sintered at a low temperature of 200 to 300°C by using a metal paste for low temperature sintering. When sintering at a low temperature, even if a thickness of the metallized layer 6 is increased, the deformation of the supporting substrate 5 due to thermal stress during sintering can be reduced. The metallized layer 6 may be formed by repeatedly coating and sintering a metal paste containing metal powder.

Either the polarizer 4 or the metallized layer 6 may be formed first. A stepped surface (an upper surface of the step and a lower surface of the step) may be formed on the main surface of the supporting substrate 5 on which the metallized layer 6 is to be formed, the metallized layer 6 may be formed on the lower surface of the step, and then the polarizer 4 may be formed on the upper surface of the step. As a result, after the metallized layer 6 is formed, the upper surface of the step, which is the forming surface of the polarizer 4, can be polished. Therefore, it becomes easy to clean the forming surface of the polarizer 4 which is the function part, and the performance of the polarization plate A is improved.

Fig. 1 shows an example in which a mirror 11 and an emission window 12 are provided, and an emission optical path (optical axis) L of the image light including an emission light (the light source light) from the light source 2 is shown with an arrow of dashed line in the figure.

When a vehicle equipped with the HUD device 20 is exposed to sunlight and sunlight enters from the emission window 12 in the opposite direction of the optical axis L, the sunlight is reflected by the mirror 11 and reaches the polarization plate A, and the polarizer 4 is heated. Here, the sunlight includes not only the sunlight itself but also the sunlight that has passed through the window of the vehicle.

As shown in FIG. 4, the HUD device 20 may be provided with the light-expansion adjusting member 13 adjusting the spread of light between the polarization plate A and the mirror 11. When the light-expansion adjusting member 13 is provided between the polarization plate A and the mirror 11, the image light can be magnified by the light expansion adjusting member 13. If images of the same size are required, each member can be made smaller, so that the HUD device 20 can be miniaturized. As the light-expansion adjusting member 13, for example, a convex lens can be used.

The mirror 11 may be a concave mirror 11. The concave mirror 11 has both functions of the mirror 11 and the light-expansion adjusting member 13. Therefore, the number of members of the HUD device 20 can be reduced.

Although the polarization plate A may have another substrate for forming the polarizer 4 between the polarizer 4 and the supporting substrate 5, when the polarizer 4 and the supporting substrate 5 are in contact with each other, heat transfer between them is performed by heat conduction between the solids. As a result, the heat radiation is improved, the effect of cooling the polarizer 4 is increased, and damages to the polarizer 4 due to heat can be suppressed. In the example of Fig 1, the supporting substrate 5 is in contact with the polarizer 4. The polarizer 4 may be formed directly on the surface of the supporting substrate 5, or they may be adhered to each other via a heat conductive adhesive layer.

The HUD device 20 may have a mechanism for cooling the first heat radiation part 8 by an air flow. For cooling by the air flow, a blower such as a fan may be used to air-cool the first heat radiation part 8, or an air flow generated by the movement of a moving body such as a vehicle may be used. In order to improve the cooling effect, cooling fins may be provided in the first heat radiation part 8.

As shown in FIG. 4, the HUD device 20 may have an incident side polarizer 14 disposed between the light source 2 and the image forming part 3, in addition to the polarizer 4 on the emission side of the image forming part 3. The HUD device 20 having the incident side polarizer 14 may have the supporting substrate 15 for radiating the heat from the incident side polarizer 14, a metallized layer 16, and a connection part 17 made of metal, and may be connected to the first heat radiation part 8. The HUD device 20 may have a supporting substrate (not shown) for radiating the heat from the image forming part 3, a metallized layer (not shown), and a connection part (not shown) made of metal, and may be connected to the first heat radiation part 8.

Since sapphire has anisotropy, there may be various combinations of the relationship between a crystal orientation of sapphire used as the supporting substrate 5 and the optical path or the polarizer 4.

If the relationship between the anisotropy of sapphire and the optical properties is described, in terms of optical characteristics, sapphire has birefringence (that is, the transmitted light is split into two light beams) with respect to the light traveling in a direction inclined to a c-axis. On the other hand, it does not have the birefringence for light in a direction parallel to the c-axis. Therefore, when a c-surface of the supporting substrate 5 made of sapphire is disposed so as to be opposite to the polarizer 4 (the incident surface and the emission surface are made to be the c-surfaces of the sapphire), even if the supporting substrate 5 is disposed on the emission side of the polarizer 4, the image light transmitted from the image forming part 3 through the polarizer 4 is incident on the c-surface of the supporting substrate 5. As a result, distortion and blurring of the image can be suppressed. When the distance between the supporting substrate 5 and a display part is as short as 2 m or less, an a-surface, an m-surface, an r-surface of the sapphire may be disposed so as to be opposite to the polarizer 4.

Sapphire also has an anisotropy in thermal conductivity, and it has a high thermal conductivity in a direction parallel to the c-axis. Therefore, when the supporting substrate 5 in which the main surface where the polarizer 4 is disposed is substantially parallel to the c-surface is used, a thickness direction of the substrate and the direction of the c-axis of sapphire are substantially coincide with each other, and thus the heat radiation performance in the thickness direction of the substrate is improved. Further, if the supporting substrate 5 whose main surface is substantially perpendicular to the c-surface and the connection part 7 is disposed substantially in the direction of the c-axis with respect to the polarizer 4 which is a heat generating part (the angle formed with the c-axis is 15 ° or less), the heat radiation performance to the connection part 7 and the heat radiation part 8 is improved. Here, being substantially parallel to the c-surface (c-axis) means that an angle formed with the c-surface (c-axis) is 15°or less. Being substantially perpendicular to the c-surface (c-axis) means that an angle formed with the c-surface (c-axis) is 75°or more.

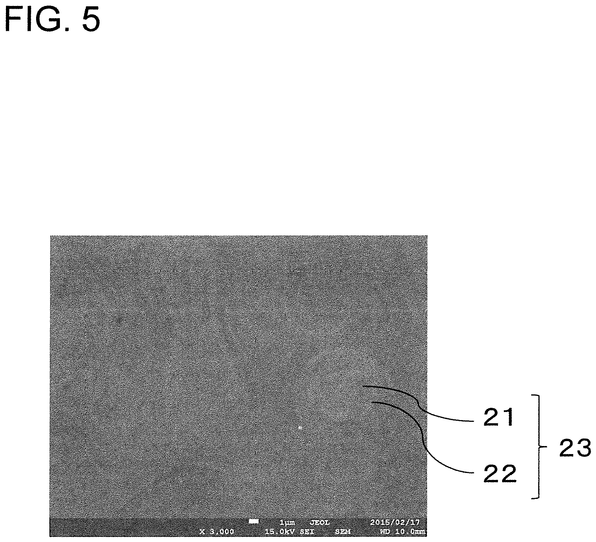

Further, when a rectangular sapphire is heat-treated under specific conditions, ruggedness is formed on the surface as shown in Fig. 5 depending on the crystal orientation. A terrace surface 21 is a surface spreading in a plane shape, and a side surface 22 is a surface being in contact with an edge line of the terrace surface 21 and extending perpendicular to the other terrace surface 21. A terrace structure layer 23 composed of the terrace surface 21 and the side surface 22 has a rugged shape, so that the surface area becomes larger than that without ruggedness. The terrace surface 21 in the terrace structure layer 23 has an area of 1 µm square or more, and a width of the terrace surface 21 is approximately 1 to 10 µm. A height of the side surface 22 is high enough that an edge at least at the boundary between the terrace surface 21 and the side surface 22 can be perceived by observation with an electron microscope of approximately 3,000 times.

Fig. 5 is a photograph of an electron microscope (SEM) at a magnification of 3,000 illustrating the terrace structure layer 23.

Sapphire originally has a high thermal conductivity, and heat exchange with air is performed actively in the part having the terrace structure layer 23. That is, the part having the terrace structure layer 23 has a high heat radiation effect. When the supporting substrate 5 having a plurality of terrace structure layers 23 provided on at least a part of the surface is used, the heat radiation effect is further improved.

As a specific condition of the heat treatment, the sapphire plate is held at a temperature of 1800°C or higher and 2000°C or lower for 5 hours or longer, and then cooled to the room temperature with a temperature decrease time of 6 hours or more. The heat treatment process is performed in an atmosphere of an inert gas such as argon or in a vacuum. As a result, the rearrangement of atoms and crystal defects progresses on the surface and inside the sapphire, and microcracks, crystal defects and internal stresses formed on the surface and inside the sapphire in the processing process are reduced, so that the light transmission is improved, and the strength is enhanced.

The terrace structure layer 23 is difficult to be formed on the m-surface of the sapphire, and it is likely to be formed on the a-surface and the c-surface. When the rectangular supporting substrate 5 is used, the terrace structure layer 23 is likely to be formed on a surface where the m-axis of the sapphire does not intersect vertically. In particular, if the c-axis or an a-axis of the sapphire intersects perpendicularly to the surface, the terrace structure layer 23 is likely to be formed. When the supporting substrate 5 having the terrace structure layer 23 in a large area on the surface is used, the surface area is increased, and the heat radiation is higher than that of the supporting substrate 5 without the terrace structure layer 23.

When the incident surface and the emission surface of the supporting substrate 5 intersect perpendicular to the m-axis of the sapphire, the terrace structure layer 23 is likely to be formed on the side surface of the supporting substrate 5 after the heat treatment. In particular, if the side surface intersects perpendicular to the a-axis or the m-axis, the terrace structure layer 23 is likely to be formed.

The incident surface and the emission surface of the supporting substrate 5 may be polished after the heat treatment.

Thus, the optical device of the present disclosure has an excellent performance in radiating the heat applied to the optical components and the light source. Therefore, the optical components and the light source are less damaged and the performance deterioration is reduced, so that the optical components can be used for a long period of time.

Although the embodiments of the present disclosure have been described above, the present disclosure is not limited to the above-described embodiments, and various modifications and improvements can be made within the scope described in Claims. For example, the optical device of the present disclosure is not limited to the on-vehicle HUD device 20, and can be applied to various image display devices, lighting devices such as white LED lighting and on-vehicle headlights. Additionally, the polarizer A (optical component) is not limited to the above including the illustrations, and can be applied to various optical components such as wave plates, fluorescent plates, and liquid crystal panels (the image forming part 3 in the present embodiment).

### EXPLANATION OF SYMBOLS

- 1:: housing
- 2:: light source
- 3:: image forming part (liquid crystal panel)
- A:: polarization plate (optical component)
- 4:: polarizer
- 5, 15:: supporting substrate
- 6, 16:: metallized Layers
- 7, 17:: connection part
- 8:: first heat radiation part
- 11:: mirror
- 12:: emission window
- 13:: light expansion adjusting member
- 14:: incident side polarizer
- 18:: second heat radiation part
- 20:: optical device (HUD device)
- 21:: terrace surface
- 22:: side surface
- 23:: terrace structure layer

## Claims

1. An optical device comprising
a housing internally comprising
a light source,
an optical component comprising a supporting substrate which is formed of a sapphire plate, and has an incident surface and an emission surface through which light from the light source transmits, and
a function part disposed on the incident surface or the emission surface;
a first heat radiation part made of metal for cooling the function part disposed outside the housing; and
a second heat radiation part made of metal for cooling the light source disposed outside the housing or disposed on a wall portion of the housing so as to be exposed to the outside of the housing.

2. The optical device according to claim 1, wherein the first heat radiation part is deformable, extendable, or pivotable.

3. The optical device according to claim 1 or 2, wherein the optical component is a polarization plate, a wave plate, a fluorescent plate or a liquid crystal panel.

4. The optical device according to any one of claims 1 to 3, being an optical device for outdoor use.

5. The optical device according to claim 4, being an image display device or a light irradiation device.

6. The optical device according to any one of claims 1 to 5, wherein a mechanism supplying air flow to the first heat radiation part is provided.

7. The optical device according to any one of claims 1 to 6, wherein the first heat radiation part and the second heat radiation part are made of silver, copper, aluminum, or an alloy thereof.

8. The optical device according to any one of claims 1 to 7, wherein the emission surface and the incident surface are c-surfaces of sapphire.

9. The optical device according to any one of claims 1 to 8, wherein a connection part connecting the optical component and the first heat radiation part is disposed substantially in the direction of a c-axis of sapphire with respect to the function part.

10. The optical device according to any one of claims 1 to 7, wherein the emission surface and the incident surface of the supporting substrate are m-surfaces of sapphire, one of the side surfaces of the supporting substrate is an a-surface, and the other of the side surface of the supporting substrate is a c-surface.

11. The optical device according to any one of claims 1 to 10, wherein a plurality of terrace structure layers having a terrace surface and a side surface being in contact with an edge line of the terrace surface are located on at least a part of a side surface connecting the incident surface and the emission surface of the supporting substrate.

12. The optical device according to claim 11 wherein a width of the terrace surface is 1.0 µm to 5.0 µm.
